(19) Europäisches Patentamt
European Patent Office
Office européen des brevets

(11) EP 3 901 875 A1

(12) EUROPEAN PATENT APPLICATION

(43) Date of publication:
**27.10.2021 Bulletin 2021/43**

(51) Int Cl.:
***G06Q 10/10*** *(2012.01)*

(21) Application number: **20170513.4**

(22) Date of filing: **21.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayer Aktiengesellschaft**
**51373 Leverkusen (DE)**

(72) Inventor: **Ziletti, Angelo**
**10553 Berlin (DE)**

(74) Representative: **BIP Patents**
**c/o Bayer Intellectual Property GmbH**
**Alfred-Nobel-Straße 10**
**40789 Monheim am Rhein (DE)**

(54) **TOPIC MODELLING OF SHORT MEDICAL INQUIRIES**

(57) The present invention relates to the processing of medical inquiries. The present invention provides means for processing and analyzing a plurality of medical inquiries for various purposes.

EP 3 901 875 A1

## Description

The present invention relates to the processing of medical inquiries. The present invention provides means for processing and preparing a plurality of medical inquiries for various purposes.

Pharmaceutical companies receive a plurality of medical inquiries related to their products every day. Medical inquiries can be received by the companies from customers concerning their products via their websites, via e-mail, via phone, via social media channels, via company personnel and/or via telefax. Such medical inquiries may relate to side effects of pharmaceuticals, drug-drug-interactions, availability of products, and the like. Medical inquiries may come from patients, healthcare professionals, research institutes, public authorities and/or others.

NLP Q&A systems (natural language processing questions and answer systems) are used to answer natural language questions by querying data repositories and applying elements of language processing, information retrieval and machine learning. Such systems are able to assist humans with certain types of semantic query and search operations, such as the type of natural question-and-answer paradigm of a medical environment. An example NLP Q&A system is IBM's DeepQA technology described in US 8,275,803.

On the one hand side, a single medical inquiry can be considered as a question of a single person who is searching for a specific information related to a medicinal product the producer and/or distributor of the medicinal product may have. On the other hand, a plurality of medical inquiries from different persons provide insight into interesting issues related to the medicinal product.

The present invention provides means for obtaining information from a plurality of medical inquiries and the use of such information for different purposes.

In a first aspect, the present invention relates to a computer-implemented method comprising the steps

- receiving a plurality of medical inquiries related to one or more medicinal products
- pre-processing each medical inquiry of the plurality of medical inquiries, thereby generating a plurality of pre-processed medical inquiries, each pre-processed medical inquiry containing a list of tokens, whereas the pre-processing step comprises the sub-steps
    - ◦ resolving acronyms
    - ◦ removing non-informative phrases and/or words
    - ◦ tokenization
    - ◦ lemmatization
- determining a vector for each pre-processed medical inquiry, the vector being a semantic representation of the medical inquiry, whereas the determining step comprises the sub-steps
    - ◦ determining a first vector for each token of a medical inquiry, whereas each first vector is a semantic representation of the token
    - ◦ determining a second vector from all first vectors of a medical inquiry, the second vector being an average of all first vectors of a medical inquiry
- clustering all vectors for each medicinal product, thereby generating a set of clusters for each medicinal product
- determining a topic for each cluster of a medicinal product
- outputting the topics for one or more medicinal products.

In a further aspect, the present invention relates to a computer system comprising:

a receiving unit

a processing unit, and

an output unit,

- wherein the processing unit is configured to cause the receiving unit to receive a plurality of medical inquiries related to one or more medicinal products
- wherein the processing unit is configured to pre-processes each medical inquiry of the plurality of medical inquiries, thereby generating a plurality of pre-processed medical inquiries, each pre-processed medical inquiry containing a list of tokens, whereas the pre-processing step comprises the sub-steps
    - ◦ resolving acronyms
    - ◦ removing non-informative phrases and/or words
    - ◦ tokenization
    - ◦ lemmatization
- wherein the processing unit is configured to determine a vector for each pre-processed medical inquiry, the vector being a semantic representation of the medical inquiry, whereas the step of determining the vector comprises the sub-steps
    - ◦ determining a first vector for each token of a medical inquiry, whereas each first vector is a semantic representation of the token
    - ◦ determining a second vector from all first vectors of a medical inquiry, the second vector being an average of all first vectors of a medical inquiry
- wherein the processing unit is configured to cluster all vectors for each medicinal product, thereby generating a set of clusters for each medicinal product
- wherein the processing unit is configured to determine a topic for each cluster of a medicinal product
- wherein the processing unit is configured to cause the output unit to output the topics for one or mode medicinal products.

In a further aspect, the present invention relates to a computer-readable storage medium comprising instructions which, when executed by a computer, cause the computer to carry out steps

- receiving a plurality of medical inquiries related to one or more medicinal products
- pre-processing each medical inquiry of the plurality of medical inquiries, thereby generating a plurality of pre-processed medical inquiries, each pre-processed medical inquiry containing a list of tokens, whereas the pre-processing step comprises the substeps
    - resolving acronyms
    - removing non-informative phrases and/or words
    - tokenization
    - lemmatization
- determining a vector for each pre-processed medical inquiry, the vector being a semantic representation of the medical inquiry, whereas the determining step comprises the sub-steps
    - determining a first vector for each token of a medical inquiry, whereas each first vector is a semantic representation of the token
    - determining a second vector from all first vectors of a medical inquiry, the second vector being an average of all first vectors of a medical inquiry
- clustering all vectors for each medicinal product, thereby generating a set of clusters for each medicinal product
- determining a topic for each cluster of a medicinal product
- outputting the topics for one or mode medicinal products.

The individual elements which characterize the method, the computer system, and the computer-readable storage medium according to the invention are explained in more detail below. This explanation does not make a distinction between the individual subjects of the invention (method, computer system, computer-readable storage medium). Instead, the following descriptions apply analogously to all subjects of the invention, irrespective of their context.

The present invention provides means for processing a plurality of medical inquiries and prepare them for the analysis by a user such as a medical expert.

A medical inquiry is any question and/or comment and/or information received by a producer and/or distributer of one or more medicinal product(s) concerning the one or more medicinal product(s).

In a first step, a plurality of medical inquiries is received. The term "plurality" means more than one. Preferably, the term "plurality" means more than 100, more preferably more than 200, even more preferably more than 500.

Each medical inquiry can be received as atext file (written text) and/or as a voice message (spoken text). It can be received via e-mail, SMS, letter, phone, telefax and/or any other means for transmitting and receiving messages and/or information.

For processing the plurality of medical inquiries in accordance with the methods described herein, each medical inquiry needs to be present as a digital text file (such as an ASCII-file or XML-file).

A medical inquiry which is not already received as a digital text file can be converted in a digital text file. For example, a letter or a telefax can be scanned and the resulting image file can then be analyzed by optical character recognition (OCR) technology in order to identify characters in the scanned copy and convert the scanned copy into a digital text file. For example, a voice message can be recorded as a digital audio file (such as a WAV-file) and speech-to-text technology can be used in order to convert the audio file into a digital text file.

Each medical inquiry can be formulated in any language. In a preferred embodiment, each medical inquiry which is not formulated in English will be translated into English. The translation can be done word by word. Preferably, translation is done by a machine translation tool such as DeepL Translator, Google Translate, Microsoft Translate, Yandex.Translate, Amazon Translate, IBM Watson Language Translator, Babylon and/or the like.

Each medical inquiry usually relates to one or more medicinal product(s).

A medicinal product is any device, software, substance, composition, biologic material or combination(s) thereof that is intended to treat, prevent or diagnose a disease, or to restore, correct or modify physiological functions by exerting a pharmacological, immunological or metabolic action. In a preferred embodiment, the medicinal product is or comprises a pharmaceutical drug.

The producer and/or distributer of the one or more medicinal product(s) is usually the legal entity which is (legally) responsible for the one or more medicinal product(s). It is usually the legal entity which holds market authorization for the one or more medicinal product(s).

In a preferred embodiment, a database is used to collect and store (incoming) medical inquiries. If a new medical inquiry arrives via a communication channel, it can be converted into a digital text file and stored in the database.

Medical inquiries can be grouped (clustered) according to the channel via they arrive, according to their format, according to their sender and/or the like. They can be stored in a single database or in different databases, depending on their format, the medicinal product they are related to, the type of sender (e.g. healthcare professionals vs. patients) and/or the like.

Once a certain number of medical inquiries have been collected, they can be processed in accordance with the methods described herein, in order to obtain valuable information therefrom. A reasonable number for processing and obtaining information is at least 100 - but there is no definite quantity. The plurality of medical inquiries can contain more or less than 100.

In a further step, a pre-processing step is performed on each medical inquiry. Usually the medical inquiries are real world inquiries from different persons having different concerns and/or interests and using different linguistic styles. The aim of the pre-processing step is to prepare each medical inquiry so that it can be subjected to NLP techniques.

The pre-processing step comprises certain substeps. One sub-step is acronym resolution, which means substituting an acronym in a medical inquiry by its extended form. A dictionary of acronyms can be used for this purpose. Preferably, a dictionary is created and maintained particularly for one or more specific medicinal products and/or medical conditions treated by the one or more medicinal products. In such a dictionary, acronyms and their meanings/extensions are listed which are often used in connection with the specific medicinal product(s) and medical conditions.

A further sub-step for pre-processing the medical inquiries is tokenization. Tokenization is a basic NLP process. Tokenization is the process of splitting a text into smaller units, such as individual words or terms. Each of these smaller units are called tokens. Details about tokenization can be found in the literature (see e.g. Handbook of Natural Language Processing, Chapman & Hall/CRC: Machine Learning & Pattern Recognition, ISBN-13: 978-1420085921; J. J. Webster et al.: Tokenization as the initial phase in NLP, Proc. of COLING-92, NANTES, AUG. 23 28, 1992; WO2010/132790A1).

There are several tools available for tokenization of a text which can be used for pre-processing medical inquiries in accordance with the methods described herein. An example of such a tool is scispaCy (see e.g.: M. Neumann et al.: ScispaCy: Fast and Robust Models for Biomedical Natural Language Processing, Proceedings of the BioNLP 2019 workshop, pages 319-327, arXiv: 1902.07669). We used the scipaCy library for tokenization and lemmatization. We disabled the scispaCy parser because this resulted in a significant speed-up without affecting the later topic modelling outcome.

A further sub-step for pre-processing the medical inquiries is lemmatization. In computational linguistics, lemmatization is the algorithmic process of determining the lemma of a word based on its intended meaning. In many languages, words appear in several inflected forms. For example, in English, the verb "to walk" may appear as "walk", "walked", "walks", "walking". The base form "walk", that one might look up in a dictionary, is called the lemma for the word. So, the process of lemmatization is the substitution of words or phrases in inflected forms by their lemma. Details about lemmatization can be found in the literature (see e.g. Liu et al. Journal of Biomedical Semantics 2012, 3:3; EP3248111A1; https://doi.org/10.26615/978-954-452-049-6_006).

A further sub-step for pre-processing the medical inquiries is the removal of non-informative phrases and/or words. Words which do not add meaning to a text but occur quite often are also referred to as stop words. There are some catalogs of stop words published online (see e.g. https://www.textfixer.com/tutorials/ common-english-words.txt, https://dev.mysql.com/doc/refman/8.0/en/fulltext-stopwords.html, http://xpo6.com/list-of-english-stop-words/). Techniques for the removal of stop words and non-informative phrases may be found in scientific literature (see e.g. EP3232336 A1, US20060224572, US20080204595, WO2017/048584).

In a preferred embodiment, a catalog of non-informative phrases and/or words is created and maintained particularly for one or more specific medicinal products and/or medical conditions treated by the one or more medicinal products. If for example it is already clear that a specific medical inquiry relates to a specific medicinal product (e.g. because it was received via a specific channel which is exclusively used for transmitting and receiving medical inquiries related to a specific medicinal product) then the name of the specific medicinal product and/or any other unique identifier for the specific medicinal product can be treated as a stop word. So, in a preferred embodiment of the present invention, in addition to standard English stop words, there are non-standard stop words for (specific) medical inquiries (such as e.g. ask, request, e-mail, inquiry, patient, doctor, product-dependent stop words (usually the brand and chemical name of the medicinal product the medicinal inquiry refers to) and/or the like). In medical inquiries single words might bear value, but when combined they are no longer relevant for medical topic discovery, and in fact constitute noise. One example is the word "morning": when appearing alone it is of relevance, but when it is preceded by the word "good" it loses its relevance since the expression "good morning" does not bear any significance for medical topic discovery. We compiled a short list of stop n-grams (about 20) and removed them from the corpus.

The result of the pre-processing of a plurality of medical inquiries is a plurality of pre-processed medical inquiries. A pre-processed medical inquiry is characterized in that acronyms are resolved, stop words are removed, inflected forms of words and/or phrases are replaced by their lemma, and the remaining/resulting text is converted into a list of tokens.

In a further step, a vector is determined for each pre-processed medical inquiry of the plurality of medical inquiries. The vector of a pre-processed medical inquiry is a semantic representation of the pre-processed medical inquiry. One of the main challenges of short text topic modelling is sparseness: it is not possible to extract semantic information from word co-occurrences because words rarely appear together since the text is short. In case of medical inquiries, the sparseness problem is exacerbated by two following aspects. First, the data available is limited: most medicinal products have less than 1,000 medical inquiries. Second, medical inquiries are sent by patients as well as health care professionals (e.g. physicians, pharmacists, nurses): this leads to inquiries with widely different writing styles, containing a mixture of common and specialized medical text.

The sparsity problem can be tackled by leveraging word embedding models trained on large corpora, which have been shown to learn semantic similarities directly from data, even for specialized biomedical text (for details see e.g. M. Neumann et al., ScispaCy: Fast and Robust Models for Biomedical Natural Language Processing, arXiv: 1902.07669, 2019; I. Beltagy et al.: SciBERT: Pretrained Language Model for Scientific Text, arXiv: 1903.1067; J. Lee et al.: BioBERT: a pre-trained biomedical language representation model for biomedical text mining, Bioinformatics 2020, pages 1234-1240).

In a preferred embodiment the scispaCy word embedding model (e.g. en_core_sci_md-0.2.4) is used which was trained on a large corpus containing scientific abstracts from medical literature (PubMed) as well as web pages. This model allows to treat specialized medical terminology and layman terms on the same footing, so that medical topics are discovered regardless of the writing style. A model re-training or fine-tuning is not required and not recommended because of the small amount of data and the sparsity problem: since no labels are available, one would need to train a language model on noisy and short text instances which would likely lead the model to forget the semantic learned by the scispaCy model from the large corpus.

The process of determining a vector for each pre-processed medical inquiry comprises two sub-steps. In a first sub-step a first vector is determined from the model for each token of a medical inquiry (e.g. the 200-dimensional scispaCy embedding vector). In a second sub-step a second vector is determined from all first vectors of a medical inquiry. The second vector is the arithmetic average of all first vectors of a medical inquiry.

Because of the text representation by semantic vectors, medical inquiries bearing similar meaning are mapped to nearby vectors in the high-dimensional embedding space.

It is well known that one of the main disadvantages of word vector (word2vec) models like the scispaCy model is their inability to handle out-of-vocabulary words: if a word appearing in a text is not included in the model vocabulary, it is effectively skipped from the analysis (in our case, a vector of zeros is assigned to it). To tackle this issue, several models have been proposed, initially based on charagram level embeddings (see e.g. P. Bojanowski et al.: Enriching Word Vectors with Subword Information, arXiv: 1607.04606, 2016), and more recently contextual embeddings based on character (see e.g. M. E. Peters et al.: Deep contextualized word representations, Proceedings of the 2018 Conference of the North American Chapter of the Association for Computational Linguistics: Human Language Technologies 2018, Vol. 1, 2227-2237), or byte pair encoding representations (see e.g.: R. Sennrich et al.: Neural Machine Translation of Rare Words with Subword Units, Proceedings of the 54th Annual Meeting of the Association for Computational Linguistics 2016, Vol. 1, 1715-1725; J. Devlin et al.: BERT: Pre-training of Deep Bidirectional Transformers for Language Understandings, arXiv: 1810.04805, 2018).

In a preferred embodiment, for each medicinal product the most recurring out-of-vocabulary words are identified (e.g. top 5 or top 10 or top 20 or any other quantity); these words then are included in the word2vec model so that they can be represented by a vector which accurately captures their meaning. Training a new embedding to include these new terms is not a good approach given the sparseness problem described above. To overcome this, a definition mapping is combined with an embedding strategy: in a first step each of the most recurring out-of-vocabulary words are mapped to a short definition (this is usually done by (medical) experts); in a second step the text from these definitions is used in order to obtain a (meaningful) vector representation for each of the out-of-vocabulary words with the very same embedding strategy described above (scispaCy word embedding model and arithmetic average of word vectors, the word vectors averaged now being the words of the out-of-vocabulary word definition). This procedure has two main benefits. First, it does not require any training data nor any training effort. Second, it ensures by construction that the added word vectors are compatible with the word representation model in use, in our case the scispaCy model described above.

Pharmaceutical product trade names are generally not included in the scispaCy model; however, international nonproprietary names (INNs) of drugs are included. For instance, the oncology product trade name Stivarga® is not present, while its corresponding INN (regorafenib) is. Pharmaceutical product trade names are therefore out-of-vocabulary words of particular interest for medical topic discovery, and thus, in a preferred embodiment, trade names are processed differently than other out-of-vocabulary words to ensure that all trade names appearing in medical inquiries are added to the model, regardless of them belonging to the most recurring out-of-vocabulary words or not. To automatically detect drug trade names we make use of the scispaCy named entity recognizer and the scispaCy UmlsEntityLinker as follows. First, the named entity recognizer is used to extract entities from the text; then, for each entity, the UmlsEntityLinker performs a linking with the Unified Medical Language System (see e.g.: O. Bodenreider: The Unified Medical Language System (UMLS): integrating biomedical terminology, Nucleic Acids Research 2004, D267-270) by searching within a knowledge base of approximately 2.7 million concepts via string overlap as described in: M. Neumann et al.: ScispaCy: Fast and Robust Models for Biomedical Natural Language Processing, arXiv: 1902.07669, 2019.

To limit the number of false positive matches we increased the UmlsEntityLinker threshold to 0.85 from the default of 0.7. For each entities that were successfully linked to UMLS, several information regarding the identified concepts are returned by the UmlsEntityLinker: concept unique identifier (CUI), concept preferred name, concept definition, concept aliases, and concept type unique identifier (TUI). In particular, the latter defines to which semantic group the linked concept belongs to (see e.g.: A.T. McCray et al.: Aggregating UMLS semantic types for reducing conceptual complexity, Studies in health technology and informatics 2001, 84, 216-220; O. Bodenreider et al.: Exploring semantic groups through visual approaches, Journal of biomedical informatics 2003, 36(6), 414-432); an up-to-date list of semantic type mappings can be found at https://semanticnetwork.nlm.nih.gov/. A TUI value of T121 indicates that the concept found is a Pharmacologic Substance. Extracting the entities with TUI equal to T121 allows to automatically identify drug trade names. Each drug trade name can then be mapped to the concept preferred name; if that is not present, the concept definition can be used; if that is also not present, drug trade name can be mapped to the text pharmaceutical medication drug. Once this mapping is performed, the same embedding strategy used for other out-of-vocabulary words can be followed in order to obtain semantically meaningful word vector representations.

In a further step, clustering is performed to group similar medical inquiries. Clustering is performed for each medicinal product separately.

Usually, it is not conducive to define an appropriate number of clusters *a priori.* A reasonable number of clusters depends on various interdependent factors: number of incoming medical inquiries, therapeutic area of the respective medicinal product, time frame of the analysis, and intrinsic amount of information (i.e. variety of the medical inquiries). Typically for a given medicinal product there is a handful of frequently asked questions covering a large volume of the medicinal inquiries, accompanied by numerous low-volume and less cohesive question clusters. These low-volume clusters can be particularly relevant because they often contain valuable medical information which might not even be known because the low volume makes it difficult to detect them via manual inspection.

In a preferred embodiment, a hierarchical, density-based clustering algorithm such as HDBSCAN is used (for detail see e.g.: R. Campello et al.: Density-Based Clustering Based on Hierarchical Density Estimates, Advances in Knowledge Discovery and Data Mining, 17th Pacific-Asia Conference 2013, PAKDD, pages 160-172; L. McInnes Leland et al.: hdbscan: Hierarchical density based clustering, Journal of Open Source Software 2017, 2(11), page 205; L. McInnes et al.: Accelerated Hierarchical Density Based Clustering, IEEE International Conference on Data Mining Workshops, 2017, pages 33-42).

The HDBSCAN algorithm starts by defining a mutual reachability distance based on a density estimation; the data is then represented as a weighted graph where vertices are data points and edges have weight equal to the mutual reachability distance between points. The minimum spanning tree is built and converted to a hierarchy of connected components via a union-find data structure: starting from an initial cluster containing all points, the data is subsequently split at each level of the hierarchy according to the distance, ultimately returning as many clusters as data points when the threshold distance reaches zero. This cluster hierarchy is commonly depicted as dendrogram. To obtain a meaningful set of clusters, this hierarchy needs to be condensed. The crucial point is to discern - at any given split - if two new meaningful clusters are formed by splitting their parent cluster, or instead the parent cluster is simply losing points (and in the latter case one wishes to keep the parent cluster undivided). In HDBSCAN, this decision is governed by the minimum cluster size hyperparameter (min cluster size): a cluster split is accepted only if both newly formed clusters have at least min cluster size points. The final clusters are then chosen from this set of condensed clusters by means of a measure of stability as defined by Campello et al. (Density-Based Clustering Based on Hierarchical Density Estimates, Advances in Knowledge Discovery and Data Mining, 17th Pacific-Asia Conference 2013, PAKDD, pages 160-172).

The main factor in defining min cluster size is the number of medical inquiries for a given medicinal product: in a preferred embodiment, there is a demand to obtain less than 100 clusters so that the results can be easily analyzed by medical experts. It is important to point out that min cluster size is not a strict controller of how many clusters should be formed, but rather a guidance provided to the algorithm regarding the desired clustering granularity, as outlined above. In our case, min cluster size ranged between 5 and 10 for clustering of medicinal products with a quantity of medical inquiries between 600 and 7,000, with the only exception of the intrauterine device Mirena®, for which min cluster size=21 was used to cluster approximately 46,000 medical inquiries.

This small range of variation substantially facilitate the hyperparameter search for min cluster size. Moreover, we noticed that - for approximately the same amount of medical inquiries and same min cluster size - the number of returned clusters increases with data variety, where data variety is qualitatively evaluated by manual inspection: for medical products with more diverse medical inquiries HDBSCAN tends to return a higher number of clusters, *ceteris paribus*. We utilized the leaf cluster selection method instead of the excess of mass algorithm because the former is known to return more homogeneous clusters. Due to the noise in the dataset, using the standard (hard) HDBSCAN clustering results in a large portion of the dataset (30-50%) considered as outliers consistently across all medicinal products. To overcome this, we used the soft HDBSCAN clustering, which returns - instead of a (hard) cluster assignment - the probability that a medical inquiry belongs to a given cluster. We then defined a probability threshold under which a point is considered to be an outlier; for all other points above this threshold, we associated them to the cluster with the highest probability through an argmax operation. This probability threshold ranged between $10^{-3}$ and $10^{-2}$ and it was chosen such that less than 10% of the medical inquiries are classified as outliers. Moreover, medical inquiries longer than 800 characters were also considered as outliers: this is because the text representation (average of token vectors) degrades for long sentences. These medical inquiries were gathered in the outlier cluster and made available to medical experts for manual inspection.

In a preferred embodiment a non-linear dimensionality reduction is applied to lower the dimensionality of the text representation before the clustering is performed. For example, the UMAP algorithm (L. McInnes et al.: UMAP: Uniform Manifold Approximation and Projection for Dimension Reduction, arXiv: 1802.03426, 2018; L. McInnes et al.: UMAP: Uniform Manifold Approximation and Projection, Journal of Open Source Software, 3(29), pages 861, 2018) can be used for dimensionality reduction because of its firm mathematical foundations from manifold learning and fuzzy topology, ability to meaningfully project to any number of dimensions (not only two or three like t-SNE (L. van der Maaten et al.: Visualizing Data using t-SNE, Journal of Machine Learning Research, 2008, pages 2579-2605)), and computational efficiency.

Reducing the dimensionality considerably improves the clustering computational performance, greatly facilitating model deployment to production, especially for medicinal products with more than 5,000 medical inquiries.

We projected on 100 dimensions for each medicinal product, with the exception of Mirena® for which we projected on 20 dimensions because of computational reasons due to the very large number of medical inquiries (ca. 46,000). The dimensionality reduction can in principle be omitted, especially for smaller datasets.

At the end of the clustering step, for each medicinal product a set of clusters is returned, each containing a collection of medical inquiries.

In a further step, for each cluster a topic is determined. The aim of the topic is to provide a headline for each cluster which can be understood by a human being and allows the human being to get an understanding about each cluster's content.

In a preferred embodiment, the most recurring words are concatenated to generate a topic. For example, the top-3, top4, top-5, top-6 or any other number of most recurring words are concatenated for creating the topic for each cluster.

In a preferred embodiment, the top-5 most recurring words are concatenated, provided that they appear for example in at least 20% of the medical inquiries belonging to that cluster (or any other frequency which seems reasonable); this frequency threshold is set to avoid the inclusion of words in the topic that appear very infrequently but are still in the top-5 words. So, if a word does not fulfill the frequency requirement, it is not included in the topic (resulting in topics with less than 5 words).

By such naming (topic creation), the clusters are represented by a set of words which summarize their semantic content.

In a preferred embodiment, topics with similar titles are merged in order to limit the number of topics to be presented to medical experts. For example, two topics are merged if their Jaccard distance (P. Jaccard: The distribution of the flora in the alphine zone, New Phytologist, 1912, pages 37-50) calculated at the word level exceeds a given threshold; for example, a threshold of 0.6 means that two topics are merged if they share at least three out of five words. Preferred threshold values are those in the range from 0.6 to 0.8. However, other approaches based on word similarity are also possible.

After topics are merged, new titles can be generated according to the procedure outlined above.

The result of the topic determining step is a list of topics defined by a given name, each containing a set of similar medicinal inquiries.

The list of topics is then outputted, e.g. presented to medical experts.

Since the goal is to extract as much knowledge as possible from medical inquiries, for each medicinal product a relatively large number of topics should be returned to the medical experts (typically between 60 and 100 topics). To facilitate topic exploration and analysis, topics can be visualized on a map that reflects the similarity between topics, e.g. topics close to each other in this map are semantically similar.

Such a semantic map can be calculated by (arithmetically) averaging the text representation of all medical inquiries belonging to a given topic to obtain a (single) vector representing the whole topic. A dimensionality reduction to two dimensions via UMAP is then performed on these topic vectors to obtain a plot which can be outputted to medical experts.

These vectors representing topics can also be used to recommend semantically similar topics to the medical experts by retrieving the closest vectors to a given topic in this semantic topic space.

In order to determine the "quality" of topics, a score is calculated for each topic. One way of quantifying the quality of a discovered topic is to determine how similar the medical inquiries grouped in a topic are: intuitively, the more similar the questions in a topic, the higher the quality of such topic. As described above, the word2vec model maps inquiries in a semantic space where clustering is performed. From a geometrical point of view, the within-topic inquiry similarity - and thus topic quality - can be estimated by calculating the similarity among medical inquiries within a given topic in this semantic space; those similarities can then be used to evaluate the semantic compactness of a topic. In a preferred embodiment the similarity of all sentences belonging to a given topic with each other is calculated (excluding self-similarity), the elements of the resulting similarity matrix are added, and the resulting sum is divided by the total number of elements in this matrix. This topic semantic compactness $\gamma^\alpha$ of a topic $\alpha$ reads

$$\gamma^{\alpha} = \sum_{i=1}^{|C^{\alpha}|} \sum_{\substack{j=1 \\ i \neq j}}^{|C^{\alpha}|} \frac{S(q_i, q_j)}{|C^{\alpha}|(|C^{\alpha}| - 1)} \qquad (Eq. 1)$$

wherein $|C^\alpha|$ is the cardinality of the topic $\alpha$ (how many inquiries are in topic $\alpha$), $q_i$ and $q_j$ are the word vectors representing inquiries i and j, and S is a function quantifying the semantic similarity between inquiry $q_i$ and $q_j$, taking values between 0 and 1 (S = 1 when $q_i$ and $q_j$ are identical, and S = 0 being the lowest possible similarity).

Given the chosen normalization factor (i.e. the denominator in Eq.1), $0 \leq \gamma^\alpha \leq 1$ and thus $\gamma^\alpha$ can be directly used as (a proxy for) topic quality score. The topic compactness maximum ($\gamma^\alpha = 1$) is attained if and only if every sentence (after pre-processing) contains exactly the same words. It is important to point out that $\gamma^\alpha$ automatically takes semantics into account: different but semantically similar medical inquiries would still have high similarity score, and thus would lead (as desired) to a high topic semantic compactness, despite these inquiries using different words to express similar content. $\gamma^\alpha$ does not artificially penalize novel topics just because they associate semantically different words appearing in the same inquiry.

The topic title is one of the main information shown to the users to summarize the semantic content of a discovered medical topic. It is therefore of interest to quantify how representative the title is for a given medical topic. Preferably, this is tackled by answering the following question: how similar is the title to the inquiries grouped in the topic it represents? In a preferred embodiment, the title saliency $\tau^\alpha$ for medical topic $\alpha$ is calculated according to Eq. 2:

$$\tau^{\alpha} = \sum_{i=1}^{|C^{\alpha}|} \frac{S(t^{\alpha}, q_i)}{|C^{\alpha}|} \qquad (Eq. 2)$$

wherein $|C^\alpha|$ is the cardinality of the topic $\alpha$ (how many inquiries are in topic $\alpha$), $q_i$ is the word vector representing inquiry i, $t^\alpha$ is the word vector representing the title of topic $\alpha$, and S is a function quantifying the semantic similarity between inquiry $t^\alpha$ and $q_i$.

Eq. 2 returns a score ($0 \leq \tau^\alpha \leq 1$) which quantifies how representative (salient) the title is for the topic it represents. As in the case of the topic semantic compactness, the title saliency $\tau^\alpha$ takes natively semantic (e.g. synonyms) into account via $S(t^\alpha, q_i)$ in Eq. 2.

In both, Eq. 1 and Eq. 2, the cosine similarity can used as similarity measure:

$$S(\vec{v_i}, \vec{v_j}) = \frac{\vec{v_i} \cdot \vec{v_j}}{\|\vec{v_i}\| \|\vec{v_j}\|} \qquad (Eq. 3)$$

wherein $\vec{v_i}. \vec{v_j}$ represents the scalar product, and $\|\vec{v_i}\|$ the Euclidean norm of $\vec{v_i}$.

However, in principle any other similarity measure such as for example Euclidian or Manhattan similarity, Dice or Jaccard coefficient can be used as well.

The medical inquiries processed and prepared as described above are now in a format which allows the further analysis by (medical) experts.

For example, recurring questions can be identified, and standard answers can be formulated. An FAQ section can be created on the basis of recurring questions and standard answers. In a preferred embodiment, recurring questions are identified automatically and forwarded to one or more experts in order to formulate standard answers.

For example, trends in the type of questions related to adverse events can be identified.

For example, trends in technical and/or quality complaints can be identified and forwarded to the respective quality department.

For example, trends can be identified and forwarded to the respective marketing team, medical affairs team, and/or other stakeholders.

Some implementations of the present disclosure will now be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

Fig. 1 shows schematically one embodiment of the computer system according to the present invention. The computer system (1) comprises a receiving unit (1-1), a computer (1-2), and an output unit (1-5). The computer (1-2) comprises a processing unit (1-3), and a memory (1-4).

The receiving unit (1-1) is configured to receive and provide the processing unit (1-3) with a plurality of medical inquiries related to one or more medicinal products.

The processing unit (1-3) is configured to generate a list of topics for each medicinal product from the plurality of medical inquiries.

The output unit (1-5) is configured to output the list of topics to a user such as a medical expert.

The configuration of the components of the computer system (1) can be achieved e.g. by computer-readable program code stored in the memory (1-4).

Fig. 2 illustrates a computer system (2) according to some example implementations of the present disclosure in more detail. Generally, a computer system of exemplary implementations of the present disclosure may be referred to as a computer and may comprise, include, or be embodied in one or more fixed or portable electronic devices. The computer system (2) may include one or more of each of a number of components such as, for example, processing unit (2-3) connected to a memory (2-4) (e.g., storage device).

The processing unit (2-3) may be composed of one or more processors alone or in combination with one or more memories. The processing unit (2-3) is generally any piece of computer hardware that is capable of processing information such as, for example, data, computer programs and/or other suitable electronic information. The processing unit (2-3) is composed of a collection of electronic circuits some of which may be packaged as an integrated circuit or multiple interconnected integrated circuits (an integrated circuit at times more commonly referred to as a "chip"). The processing unit (2-3) may be configured to execute computer programs, which may be stored onboard the processing unit (2-3) or otherwise stored in the memory (2-4) (of the same or another computer).

The processing unit (2-3) may be a number of processors, a multi-core processor or some other type of processor, depending on the particular implementation. Further, the processing unit (2-3) may be implemented using a number of heterogeneous processor systems in which a main processor is present with one or more secondary processors on a single chip. As another illustrative example, the processing unit (2-3) may be a symmetric multi-processor system containing multiple processors of the same type. In yet another example, the processing unit (2-3) may be embodied as or otherwise include one or more ASICs, FPGAs or the like. Thus, although the processing unit (2-3) may be capable of executing a computer program to perform one or more functions, the processing unit (2-3) of various examples may be capable of performing one or more functions without the aid of a computer program. In either instance, the processing unit (2-3) may be appropriately programmed to perform functions or operations according to example implementations of the present disclosure.

The memory (2-4) is generally any piece of computer hardware that is capable of storing information such as, for example, data, computer programs (e.g., computer-readable program code (2-6)) and/or other suitable information either on a temporary basis and/or a permanent basis. The memory (2-4) may include volatile and/or non-volatile memory and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD or the like. In various instances, the memory (2-4) may be referred to as a computer-readable storage medium. The computer-readable storage medium is a non-transitory device capable of storing information and is distinguishable from computer-readable transmission media such as electronic transitory signals capable of carrying information from one location to another. Computer-readable medium as described herein may generally refer to a computer-readable storage medium or computer-readable transmission medium.

In addition to the memory (2-4), the processing unit (2-3) may also be connected to one or more interfaces for displaying, transmitting and/or receiving information. The interfaces may include one or more communications interfaces and/or one or more user interfaces.

The communications interface(s) may be one or more receiving units (2-1) configured to receive and/or transmit information, such as to and/or from other computer(s), network(s), database(s) or the like. The communications interface may be configured to transmit and/or receive information by physical (wired) and/or wireless communications links.

The communications interface(s) may include interface(s) (2-7) to connect to a network, such as using technologies such as cellular telephone, Wi-Fi, satellite, cable, digital subscriber line (DSL), fiber optics and the like. In some examples, the communications interface(s) may include one or more short-range communications interfaces (2-8) configured to connect devices using short-range communications technologies such as NFC, RFID, Bluetooth, Bluetooth LE, ZigBee, infrared (e.g., IrDA) or the like.

The user interfaces may include an output unit (2-5) such as a display. The display may be configured to present or otherwise display information to a user, suitable examples of which include a liquid crystal display (LCD), light-emitting diode display (LED), plasma display panel (PDP) or the like. The user input interface(s) (2-9) may be wired or wireless and may be configured to receive information from a user into the computing system (1), such as for processing, storage and/or display. Suitable examples of user input interfaces include a microphone, image or video capture device (image acquisition unit), keyboard or keypad, joystick, touch-sensitive surface (separate from or integrated into a touchscreen) or the like. In some examples, the user interfaces may include automatic identification and data capture (AIDC) technology for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions may be stored in the memory (2-4) and executed by processing unit (2-3) that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computing system (2) may include processing unit (2-3) and a computer-readable storage medium or memory (2-4) coupled to the processing circuitry, where the processing circuitry is configured to execute computer-readable program code (2-6) stored in the memory. It will also be understood that one or more functions, and combinations of functions, may be implemented by special purpose hardware-based computer systems and/or processing circuitry which perform the specified functions, or combinations of special purpose hardware and program code instructions.

Fig. 3 shows schematically, in the form of a flow chart, an embodiment of the method according to the present invention. The method (3) comprises the steps:

(310) receiving a plurality of medical inquiries related to one or more medicinal products
(320) pre-processing each medical inquiry of the plurality of medical inquiries, thereby generating a plurality of pre-processed medical inquiries, whereas each pre-processed medical inquiry contains a list of tokens, whereas the pre-processing step comprises the sub-steps

  (321) resolving acronyms
  (322) tokenization
  (323) lemmatization
  (324) removing non-informative phrases and/or words

(330) determining a vector for each pre-processed medical inquiry, the vector being a semantic representation of the medical inquiry, whereas the step of determining a vector comprises the sub-steps

  (331) determining a first vector for each token of a medical inquiry, whereas each first vector is a semantic representation of the token,
  (332) determining a second vector from all first vectors of a medical inquiry, the second vector being an average of all first vectors of a medical inquiry,

(340) clustering all vectors for each medicinal product, thereby generating a set of clusters for each medicinal product
(350) determining a topic for each cluster of a medicinal product
(360) outputting the topics for one or mode medicinal products.

The method is preferably executed by the computer system according to the present invention. Respective instruction which cause the computer system of the present invention to carry out the method are preferably stored on the computer-readable storage medium of the present invention.

Fig. 4 shows an example of an output of the computer system of the present invention. The output can be depicted e.g. on a monitor (screen). All medical inquiries of this example relate to the medicinal product Xarelto®. In total, there are 6268 medical inquiries and 95 topics. On the left-hand side, a list of the topics is shown. Each topic is a representation of a cluster of similar medical inquiries. The topics are named by the most frequent words occurring in the medical inquiries of the respective cluster. Besides a topic name, a bar shows graphically the number of medical inquiries belonging to the respective cluster. Besides each bar, the absolute number of medical inquiries belonging to the respective cluster is displayed. The Topic Map is a graphic representation of the clusters. The clusters are represented by circles. The size of each circle represents the number of medical inquiries belonging to the circle. The shorter the distance between two circles in the map is, the more similar the clusters are; the longer the distance is, the more different the clusters are. Below the Topic Map a Wordcloud displays the most occurring words in the medical inquiries of a selected cluster (if a cluster is selected). In this case, the Wordcloud for the plurality of medical inquiries is shown. On the right-hand side, a user can make certain settings in order to show different aspects of the topics.

## Claims

1. A computer-implemented method comprising the steps

    • receiving a plurality of medical inquiries related to one or more medicinal products
    • pre-processing each medical inquiry of the plurality of medical inquiries, thereby generating a plurality of pre-processed medical inquiries, each pre-processed medical inquiry containing a list of tokens, whereas the pre-processing step comprises the sub-steps

        ◦ resolving acronyms
        ◦ removing non-informative phrases and/or words
        ◦ tokenization
        ◦ lemmatization

    • determining a vector for each pre-processed medical inquiry, the vector being a semantic representation of the medical inquiry, whereas the determining step comprises the sub-steps

        ◦ determining a first vector for each token of a medical inquiry, whereas each first vector is a semantic representation of the token
        ◦ determining a second vector from all first vectors of a medical inquiry, the second vector being an average of all first vectors of a medical inquiry

    • clustering all vectors for each medicinal product, thereby generating a set of clusters for each medicinal product
    • determining a topic for each cluster of a medicinal product
    • outputting the topics for one or mode medicinal products.

2. The method according to claim 1, wherein a word vector model is used for the step determining a vector for each pre-processed medical inquiry, in particular the scispaCy model is used.

3. The method according to claim 2, wherein for each medicinal product the most recurring out-of-vocabulary words are identified and these words then are included in the word vector model in order to be represented by a vector which accurately captures their meaning.

4. The method according to claim 3, wherein in a first step each of the most recurring out-of-vocabulary words are mapped to a definition, and in a second step the text from the definitions is used to obtain a vector representation for each of the out-of-vocabulary words.

5. The method according to any one of claims 1 to 4, wherein a hierarchical, density-based clustering algorithm is used for clustering all vectors.

6. The method according to any one of claims 1 to 5, wherein a non-linear dimensionality reduction is applied to lower the dimensionality of the semantic representation before the clustering is performed.

7. The method according to any one of claims 1 to 6, wherein the most recurring words in a topic are concatenated to generate a topic title.

8. The method according to any one of claims 1 to 7, wherein for each topic a topic quality score is calculated according to (Eq.1) and outputted

$$\gamma^{\alpha} = \sum_{i=1}^{|C^{\alpha}|} \sum_{\substack{j=1 \\ i \neq j}}^{|C^{\alpha}|} \frac{S(q_i, q_j)}{|C^{\alpha}|(|C^{\alpha}| - 1)} \qquad (Eq.1)$$

wherein $|C^{\alpha}|$ is the cardinality of the topic $\alpha$, $q_i$ and $q_j$ are the word vectors representing inquiries i and j, and S is a function quantifying the semantic similarity between inquiry $q_i$ and $q_j$.

9. The method according to any one of claims 1 to 8, wherein for each topic title a title saliency is calculated according to (Eq.2) and outputted

$$\tau^{\alpha} = \sum_{i=1}^{|C^{\alpha}|} \frac{S(t^{\alpha}, q_i)}{|C^{\alpha}|} \qquad (Eq. 2)$$

wherein $|C^{\alpha}|$ is the cardinality of the topic $\alpha$, $q_i$ is the word vector representing inquiry i, $t^{\alpha}$ is the word vector representing the title of topic $\alpha$, and S is a function quantifying the semantic similarity between inquiry $t^{\alpha}$ and $q_i$.

**10.** The method according to any one of claims 8 or 9, wherein the function S is the cosine similarity, the Euclidian similarity, the Manhattan similarity, the Dice coefficient or the Jaccard coefficient.

**11.** A computer system comprising:

a receiving unit
a processing unit, and
an output unit,

- wherein the processing unit is configured to cause the receiving to receive a plurality of medical inquiries related to one or more medicinal products
- wherein the processing unit is configured to pre-processes each medical inquiry of the plurality of medical inquiries, thereby generating a plurality of pre-processed medical inquiries, each pre-processed medical inquiry containing a list of tokens, whereas the pre-processing step comprises the sub-steps
    - resolving acronyms
    - removing non-informative phrases and/or words
    - tokenization
    - lemmatization
- wherein the processing unit is configured to determine a vector for each pre-processed medical inquiry, the vector being a semantic representation of the medical inquiry, whereas the step of determining the vector comprises the sub-steps
    - determining a first vector for each token of a medical inquiry, whereas each first vector is a semantic representation of the token
    - determining a second vector from all first vectors of a medical inquiry, the second vector being an average of all first vectors of a medical inquiry
- wherein the processing unit is configured to cluster all vectors for each medicinal product, thereby generating a set of clusters for each medicinal product
- wherein the processing unit is configured to determine a topic for each cluster of a medicinal product
- wherein the processing unit is configured to cause the output unit to output the topics for one or mode medicinal products.

**12.** A computer-readable storage medium comprising instructions which, when executed by a computer, cause the computer to carry out steps

- receiving a plurality of medical inquiries related to one or more medicinal products
- pre-processing each medical inquiry of the plurality of medical inquiries, thereby generating a plurality of pre-processed medical inquiries, each pre-processed medical inquiry containing a list of tokens, whereas the pre-processing step comprises the sub-steps
    - resolving acronyms
    - removing non-informative phrases and/or words
    - tokenization
    - lemmatization
- determining a vector for each pre-processed medical inquiry, the vector being a semantic representation of the medical inquiry, whereas the determining step comprises the sub-steps
    - determining a first vector for each token of a medical inquiry, whereas each first vector is a semantic representation of the token
    - determining a second vector from all first vectors of a medical inquiry, the second vector being an average of all first vectors of a medical inquiry
- clustering all vectors for each medicinal product, thereby generating a set of clusters for each medicinal product
- determining a topic for each cluster of a medicinal product
- outputting the topics for one or mode medicinal products.

**13.** The computer-readable storage medium according to claim 12, comprising instructions which, when executed by a computer system according to claim 11 cause the computer system to carry out the steps of the method of any one of claims 1 to 10.

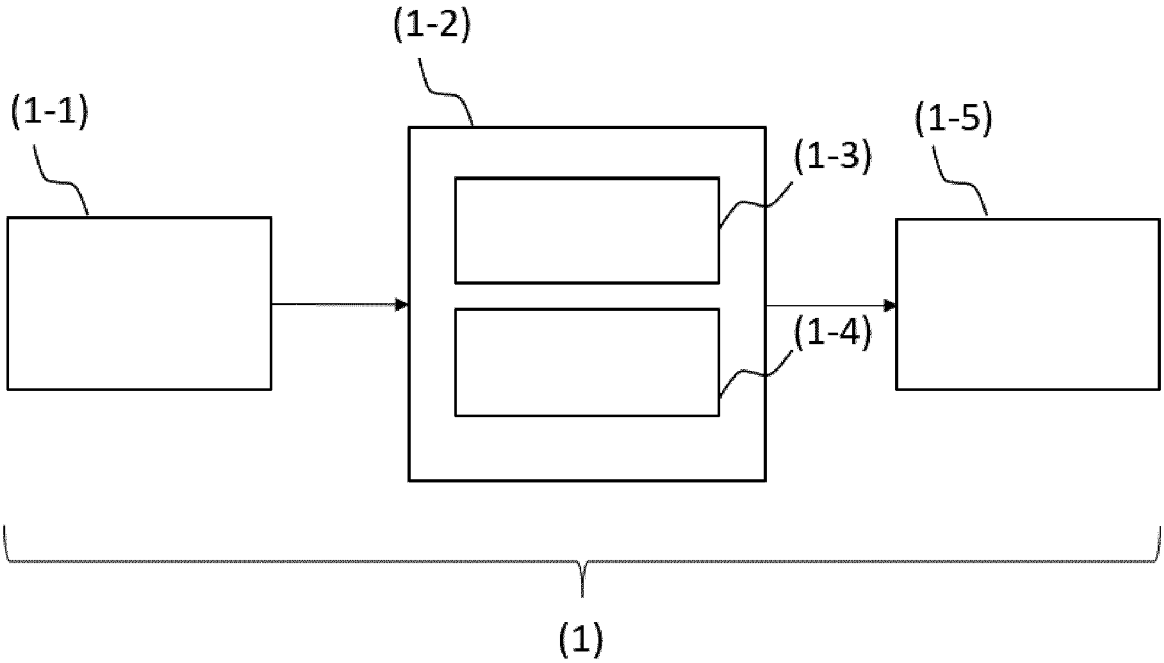


Fig. 1

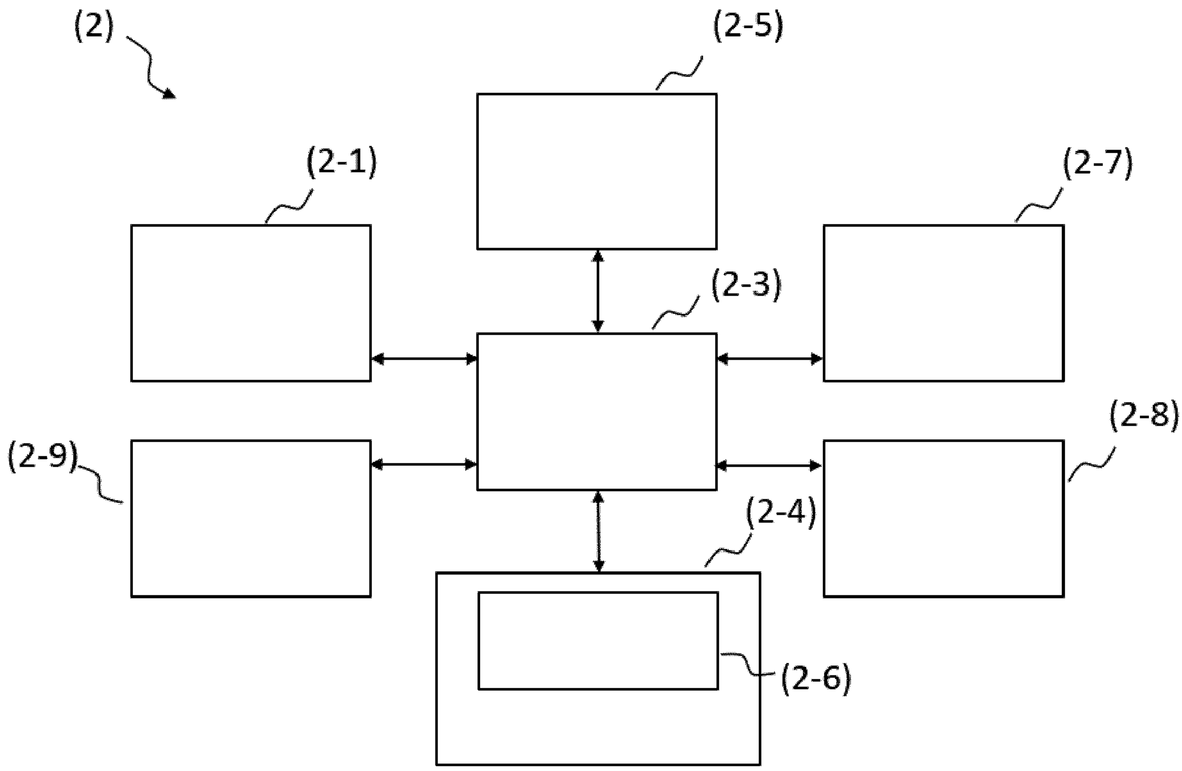


Fig. 2

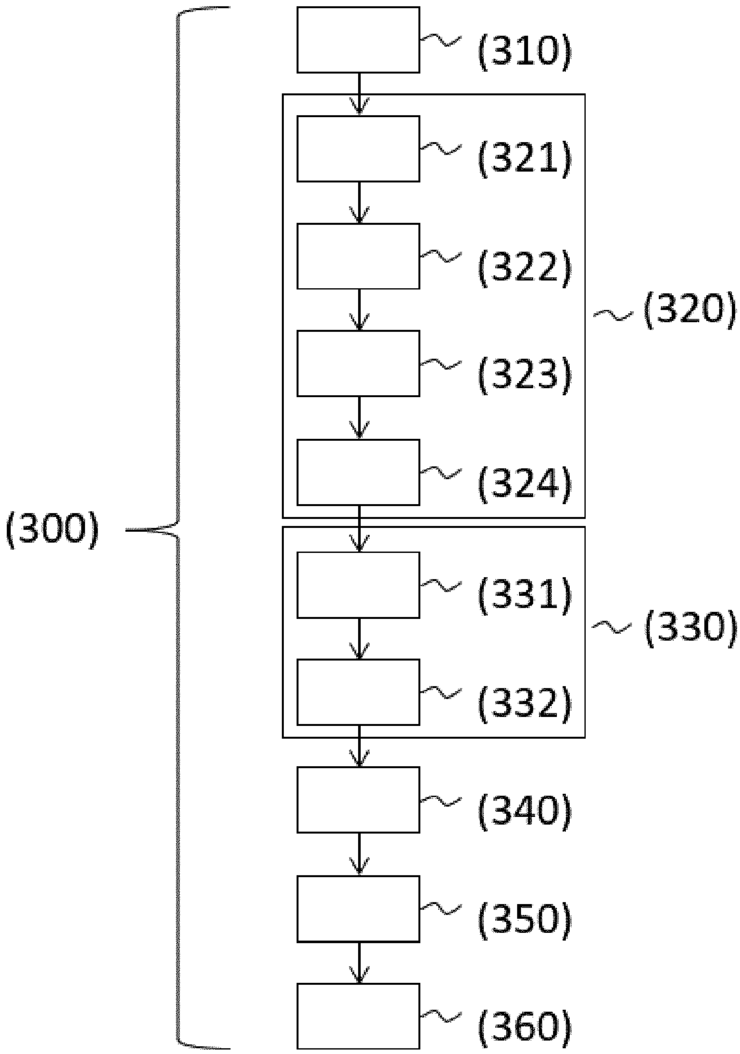


Fig. 3

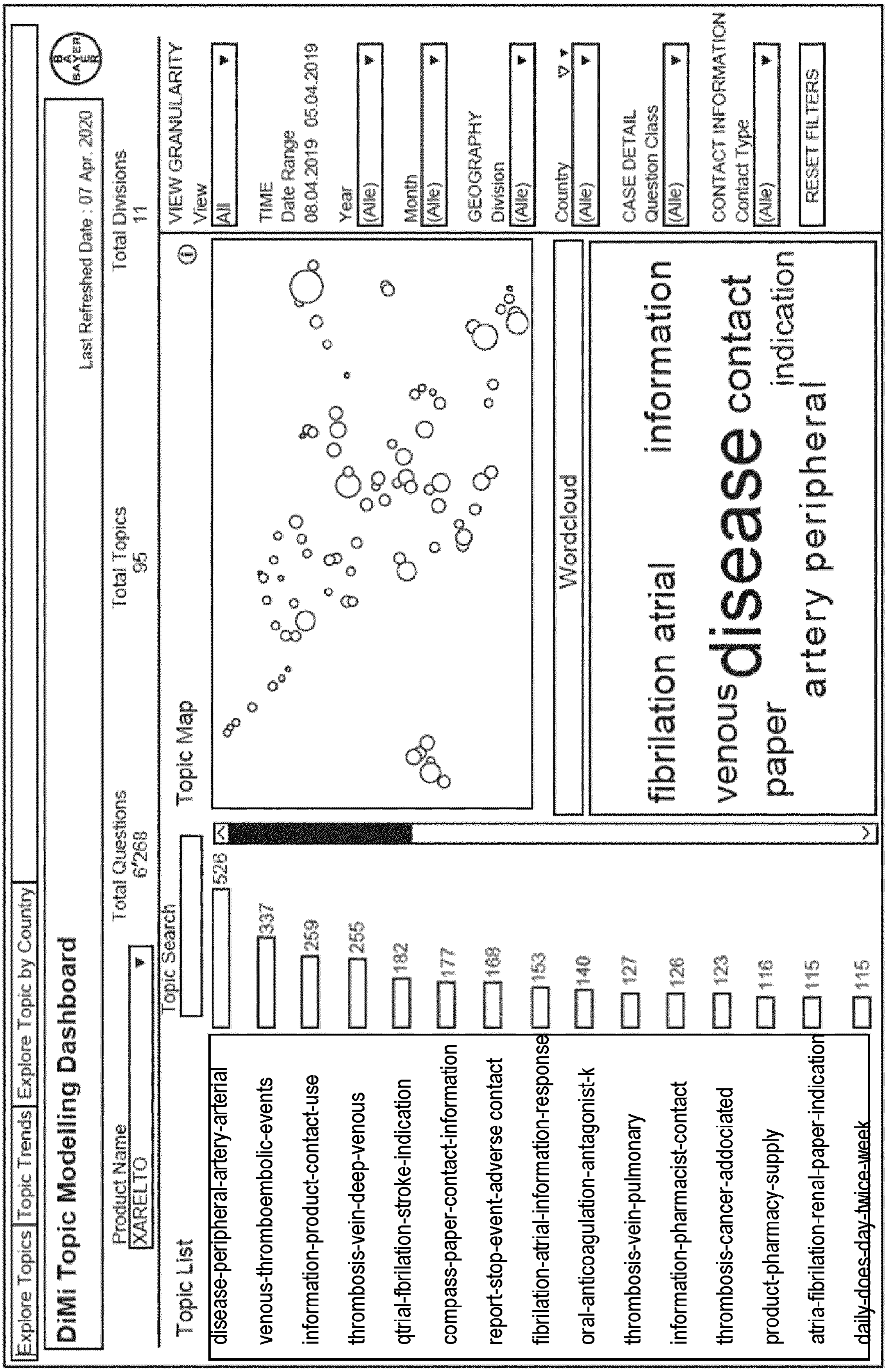
Explore Topics
Topic Trends
Explore Topic by Country
DiMi Topic Modelling Dashboard
Last Refreshed Date : 07 Apr. 2020
BAYER
Product Name
XARELTO
Total Questions
6'268
Total Topics
95
Total Divisions
11
Topic List
Topic Search
disease-peripheral-artery-arterial 526
venous-thromboembolic-events 337
information-product-contact-use 259
thrombosis-vein-deep-venous 255
qtrial-fbrilation-stroke-indication 182
compass-paper-contact-information 177
report-stop-event-adverse contact 168
fibrilation-atrial-information-response 153
oral-anticoagulation-antagonist-k 140
thrombosis-vein-pulmonary 127
information-pharmacist-contact 126
thrombosis-cancer-addociated 123
product-pharmacy-supply 116
atria-fibrilation-renal-paper-indication 115
daily-does-day-twice-week 115
Topic Map
Wordcloud
fibrilation atrial information
venous disease contact
paper indication
artery peripheral
VIEW GRANULARITY
View
All
TIME
Date Range
08.04.2019 05.04.2019
Year
(Alle)
Month
(Alle)
GEOGRAPHY
Division
(Alle)
Country
(Alle)
CASE DETAIL
Question Class
(Alle)
CONTACT INFORMATION
Contact Type
(Alle)
RESET FILTERS

Fig. 4

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | WO 2020/042164 A1 (BEIJING DIDI INFINITY TECHNOLOGY & DEV CO LTD [CN]) 5 March 2020 (2020-03-05) * abstract * * paragraph [0008] - paragraph [0010] * * paragraph [0036] - paragraph [0038] * * paragraph [0054] - paragraph [0059] * ----- | 1-13 | INV. G06Q10/10 |
| | | | TECHNICAL FIELDS SEARCHED (IPC) |
| | | | G06Q G06F |

The present search report has been drawn up for all claims

2

| Place of search | Date of completion of the search | Examiner |
|---|---|---|
| Munich | 7 October 2020 | Lopes Margarido, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

This annex lists the patent family members relating to the patent documents cited in the above-mentioned European search report. The members are as contained in the European Patent Office EDP file on
The European Patent Office is in no way liable for these particulars which are merely given for the purpose of information.

07-10-2020

| Patent document cited in search report | Publication date | Patent family member(s) | Publication date |
|---|---|---|---|
| WO 2020042164 A1 | 05-03-2020 | CN 111373395 A | 03-07-2020 |
| | | WO 2020042164 A1 | 05-03-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8275803 B
- WO 2010132790 A1
- EP 3248111 A1
- EP 3232336 A1
- US 20060224572 A
- US 20080204595 A
- WO 2017048584 A


### Non-patent literature cited in the description


- Handbook of Natural Language Processing. Chapman & Hall/CRC
- **J. J. WEBSTER et al.** *Tokenization as the initial phase in NLP, Proc. of COLING-92,* 23 August 1992
- **M. NEUMANN et al.** ScispaCy: Fast and Robust Models for Biomedical Natural Language Processing. *Proceedings of the BioNLP 2019 workshop,* 319-327
- **LIU et al.** *Journal of Biomedical Semantics,* 2012, vol. 3, 3
- **M. NEUMANN et al.** ScispaCy: Fast and Robust Models for Biomedical Natural Language Processing. *arXiv: 1902.07669,* 2019
- **I. BELTAGY et al.** SciBERT: Pretrained Language Model for Scientific Text. *arXiv: 1903.1067*
- **J. LEE et al.** BioBERT: a pre-trained biomedical language representation model for biomedical text mining. *Bioinformatics,* 2020, 1234-1240
- **P. BOJANOWSKI et al.** Enriching Word Vectors with Subword Information. *arXiv: 1607.04606,* 2016
- **M. E. PETERS et al.** Deep contextualized word representations. *Proceedings of the 2018 Conference of the North American Chapter of the Association for Computational Linguistics: Human Language Technologies,* 2018, vol. 1, 2227-2237
- **R. SENNRICH et al.** Neural Machine Translation of Rare Words with Subword Units. *Proceedings of the 54th Annual Meeting of the Association for Computational Linguistics,* 2016, vol. 1, 1715-1725
- **J. DEVLIN et al.** BERT: Pre-training of Deep Bidirectional Transformers for Language Understandings. *arXiv: 1810.04805,* 2018
- **O. BODENREIDER.** The Unified Medical Language System (UMLS): integrating biomedical terminology. *Nucleic Acids Research,* 2004, D267-270
- **A.T. MCCRAY et al.** Aggregating UMLS semantic types for reducing conceptual complexity. *Studies in health technology and informatics,* 2001, vol. 84, 216-220
- **O. BODENREIDER et al.** Exploring semantic groups through visual approaches. *Journal of biomedical informatics,* 2003, vol. 36 (6), 414-432
- **R. CAMPELLO et al.** Density-Based Clustering Based on Hierarchical Density Estimates. *Advances in Knowledge Discovery and Data Mining, 17th Pacific-Asia Conference 2013, PAKDD,* 160-172
- **L. MCINNES LELAND et al.** dbscan: Hierarchical density based clustering. *Journal of Open Source Software,* 2017, vol. 2 (11), 205
- **L. MCINNES et al.** Accelerated Hierarchical Density Based Clustering. *IEEE International Conference on Data Mining Workshops,* 2017, 33-42
- **CAMPELLO et al.** Density-Based Clustering Based on Hierarchical Density Estimates. *Advances in Knowledge Discovery and Data Mining, 17th Pacific-Asia Conference 2013, PAKDD,* 160-172
- **L. MCINNES et al.** UMAP: Uniform Manifold Approximation and Projection for Dimension Reduction. *arXiv: 1802.03426,* 2018
- **L. MCINNES et al.** UMAP: Uniform Manifold Approximation and Projection. *Journal of Open Source Software,* 2018, vol. 3 (29), 861
- **L. VAN DER MAATEN et al.** Visualizing Data using t-SNE. *Journal of Machine Learning Research,* 2008, 2579-2605
- **P. JACCARD.** The distribution of the flora in the alphine zone. *New Phytologist,* 1912, 37-50